# EUROPEAN PATENT APPLICATION

(11) **EP 4 407 772 A1**
(43) Date of publication of application: **31.07.2024**
(21) Application number: 22919415.4
(22) Date of filing: 13.01.2022
(51) Int. Cl.: H01M 50/30, F16K 17/04

(54) **PRESSURE RELIEF MECHANISM, BATTERY, APPARATUS, AND MANUFACTURING METHOD AND DEVICE FOR BATTERY**

(71) Applicant: Contemporary Amperex Technology Co., Limited, Ningde, Fujian 352100 (CN)
(72) Inventor: HUANG, Zhijie, Ningde, Fujian 352100 (CN); MIAO, Huimin, Ningde, Fujian 352100 (CN); YU, Xiaoyin, Ningde, Fujian 352100 (CN)
(74) Representative: Behr, Wolfgang
(86) International application number: PCT/CN2022/071730
(87) International publication number: WO 2023/133751

(57) **Abstract**

This application discloses a pressure relief mechanism, a battery, an apparatus, and a method and equipment for manufacturing a battery. The pressure relief mechanism includes: a pedestal, a cover assembly, and a position limiter. An exhaust port is created on the pedestal. The cover assembly is configured to close or open the exhaust port. The position limiter is snap-fastened to the cover assembly. The position limiter includes a first elastomer and a first limiting portion. The first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port. This embodiment of this application can implement rapid pressure relief inside the box to keep a gas pressure consistent between the inside and outside of the box.

## Description

### TECHNICAL FIELD

This application relates to the field of batteries, and in particular, to a pressure relief mechanism, a battery, an apparatus, and a method and equipment for manufacturing a battery.

### BACKGROUND

With the development of electric vehicles, batteries have become the key to sustainable development of the automotive industry. Battery manufacturing technology is crucial to development of electric vehicles. Currently, under the trend of automobile electrification, the population of electric vehicles in China is growing rapidly. However, electric vehicles incur fires and combustion accidents frequently, and the safety of electric vehicles has become a focus of consumers' attention and is a fundamental guarantee for sustainable and healthy development of the new energy vehicle industry. Therefore, the relevant authority has recently issued mandatory national standards related to electric vehicles such as *Safety Requirements for Electric Vehicles* and *Electric Vehicles Traction Battery Safety Requirements.* The *Safety Requirements for Electric Vehicles* primarily stipulates the requirements on electrical safety and functional safety of electric vehicles, and emphasizes the requirements on waterproof performance of the integrated vehicle, insulation resistance, and performance monitoring, so as to reduce safety hazards of the vehicles in normal use and under circumstances such as wading. The *Electric Vehicles Traction Battery Safety Requirements* standard stresses the requirements on thermal safety, electrical safety, and functional safety of a battery system, and especially adds thermal diffusion test and waterproof requirements for a battery system in the latest version of the standard.

The safety and working reliability of an electric vehicle power system (such as a battery pack) serving as a core of a new energy electric vehicle are vital. To ensure safe and stable operation of the electric vehicle power system, the power system needs to be waterproof and dustproof, that is, fully hermetically sealed in theory. However, in a fully hermetic state, once a thermal runaway risk occurs inside the power system due to a fault, the internal pressure of the power system increases sharply, and the power system is at risk of explosion, thereby being prone to cause heavy casualties and property losses.

### SUMMARY

In view of the foregoing problem, this application provides a pressure relief mechanism, a battery, an apparatus, and a method and equipment for manufacturing a battery. The pressure relief mechanism can implement rapid pressure relief inside the box to keep a gas pressure consistent between the inside and outside of the box.

According to a first aspect, this application provides a pressure relief mechanism, applicable to a box. The pressure relief mechanism includes: a pedestal, a cover assembly, and a position limiter. An exhaust port is created on the pedestal. The cover assembly is configured to close or open the exhaust port. The position limiter is snap-fastened to the cover assembly. The position limiter includes a first elastomer and a first limiting portion. The first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port.

In the technical solution in an embodiment of this application, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

In some embodiments, the first limiting portion is configured as a first bulge, and a first groove is created in the pedestal; or, the first limiting portion is configured as a first groove, and a first bulge is created on the pedestal. The first bulge and the first groove are configured to: when the cover assembly closes the exhaust port, fit each other to restrict the position limiter from moving relative to the pedestal; and, when the pressure in the box increases, make the position limiter move along the opening direction of the cover assembly to free the first bulge from constraint of the first groove.

In the technical solutions in such embodiments of this application, when the cover assembly closes the exhaust port, the first bulge and the first groove fit each other to restrict the position limiter from moving relative to the pedestal. When the pressure in the box increases, the pressure in the box makes the position limiter move along the opening direction of the cover assembly to free the first bulge from constraint of the first groove. When the first bulge is freed from constraint of the first groove, the position limiter can rotate relative to the cover assembly under resilience of the first elastomer, so that the first limiting portion abuts the end face of the pedestal to keep the cover assembly in the state of opening the exhaust port.

In some embodiments, a second bulge is created on one of the cover assembly or the position limiter, and a second groove is created in the other of the cover assembly or the position limiter. The second groove and the second bulge are so configured that at least a part of the second bulge is disposed in the second groove, and the cover assembly is able to drive, through a fit between the second groove and the second bulge, the position limiter to move along the opening direction of the cover assembly.

In the technical solutions in such embodiments of this application, when the pressure in the box increases, the pressure in the box makes the position limiter move along the opening direction of the cover assembly. In this case, through the fit between the second groove and the second bulge, the cover assembly can drive the position limiter to move along the opening direction of the cover assembly, so that the position limiter moves along the opening direction of the cover assembly to free the first bulge from constraint of the first groove. When the first bulge is freed from constraint of the first groove, the position limiter can rotate relative to the cover assembly under resilience of the first elastomer, so that the first limiting portion abuts the end face of the pedestal. In this case, when the position limiter rotates relative to the cover assembly, the second bulge moves relatively within a movement range defined by the second groove.

In some embodiments, along a circumferential direction of the position limiter, a dimension of the second groove is greater than a dimension of the second bulge, thereby enabling the position limiter to rotate relative to the cover assembly.

In the technical solutions in such embodiments of this application, due to the dimension of the second groove being greater than the dimension of the second bulge, when the position limiter rotates relative to the cover assembly, the second bulge can move relatively within the movement range defined by the second groove.

In some embodiments, the second groove is created in the cover assembly, and the second bulge is created on the position limiter.

In the technical solutions in such embodiments of this application, when the position limiter moves along the opening direction of the cover assembly, through the fit between the second groove and the second bulge, the cover assembly can drive the position limiter to move along the opening direction of the cover assembly. In addition, when the position limiter rotates relative to the cover assembly, the second bulge can move relatively within a movement range defined by the second groove.

In some embodiments, the second bulge is disposed on an outer peripheral surface of the position limiter.

In the technical solutions in such embodiments of this application, a part of the cover assembly is disposed along the outer peripheral surface of the position limiter. Therefore, by disposing the second bulge on the outer peripheral surface of the position limiter, the cover assembly and the position limiter can be assembled together by fitting the second bulge into the second groove directly, thereby facilitating the assembling.

In some embodiments, a protruding portion is disposed on a side of the cover assembly, the side being oriented toward the position limiter. The second groove is created in the protruding portion.

In the technical solutions in such embodiments of this application, the protruding portion is disposed on the side of the cover assembly, the side being oriented toward the position limiter. In this way, the cover assembly and the position limiter can be assembled together by fitting the second bulge into the second groove directly, thereby facilitating the assembling.

In some embodiments, a third groove is created in one of the cover assembly or the pedestal. A first guide piece is disposed on the other of the cover assembly or the pedestal. The third groove and the first guide piece are so configured that at least a part of the first guide piece is located in the third groove; and, when the position limiter moves along the opening direction of the cover assembly, the first guide piece moves within a path defined by the third groove.

In the technical solutions in such embodiments of this application, the movement range of the first guide piece can be limited within the path defined by the third groove.

In some embodiments, a protruding portion is disposed on a side of the cover assembly, the side being oriented toward the position limiter. The third groove is created in the protruding portion. The third groove opens toward the pedestal. The first guide piece is disposed on the pedestal.

In the technical solutions in such embodiments of this application, a protruding portion is disposed on the side of the cover assembly, the side being oriented toward the position limiter. The third groove is created in the protruding portion, and the third groove opens toward the pedestal, thereby providing a specific direction and position of the third groove. By disposing the first guide piece on the pedestal, a mounting position of the first guide piece is provided. With such arrangement, when the position limiter moves along the opening direction of the cover assembly, the first guide piece is enabled to move within the path defined by the third groove. Moreover, this design facilitates assembling and saves assembling cost.

In some embodiments, when the position limiter rotates relative to the cover assembly, at least a part of the first guide piece is located in the third groove to limit a position of the cover assembly.

In the technical solutions in such embodiments of this application, when the position limiter rotates relative to the cover assembly, at least a part of the first guide piece is located in the third groove, thereby preventing the cover assembly from rotating along the pedestal under the resilience of the first elastomer, and in turn, improving the practicability of the rotation of the position limiter relative to the cover assembly.

In some embodiments, an annular groove is created on a side of the position limiter, the side being oriented toward the cover assembly. The first elastomer is disposed in the annular groove. A notch is created on a wall of the annular groove. One end of the first elastomer is configured to protrude from the notch and abut against the cover assembly. Another end of the first elastomer is configured to abut on the wall of the annular groove, thereby enabling the position limiter to rotate relative to the cover assembly under the resilience of the first elastomer.

In the technical solutions in such embodiments of this application, the other end of the first elastomer is configured to abut on the wall of the annular groove, so that the other end of the first elastomer can be relatively fixed to the wall of the annular groove. One end of the first elastomer is configured to protrude from the notch and abut against the cover assembly, so that the first elastomer is enabled to exert a force on the cover assembly. In addition, because the cover assembly is restrained from rotating, such a design enables the position limiter to rotate relative to the cover assembly under the resilience of the first elastomer.

In some embodiments, the first elastomer is configured as a torsion spring.

In the technical solutions in such embodiments of this application, the implementation of the torsion spring is relatively simple and cost-efficient, and the mounting manner of the torsion spring is relatively simple, thereby reducing material cost and mounting cost.

In some embodiments, the pressure relief mechanism further includes: a second guide piece and a second elastomer. One end of the second guide piece is connected to the cover assembly. A flange extending along the second guide piece is disposed at an end of the second guide piece, the end being away from the cover assembly. The second elastomer is sleeved around the second guide piece, and one end of the second elastomer abuts on the flange.

In the technical solutions in such embodiments of this application, the second elastomer works to prevent the cover assembly from moving beyond the movement range when the cover assembly moves along the opening direction of the cover assembly, where the moving beyond the movement range may cause damage to the pressure relief mechanism. In this way, the lifespan of the pressure relief mechanism is increased. When the pressure relief mechanism is in normal use, the second elastomer can exert a force on the cover assembly to make the cover assembly hermetically seal the exhaust port.

According to a second aspect, this application further provides a battery. The battery includes: a box, on which a mounting hole is created; a battery cell, located in the box; and the pressure relief mechanism according to any one of the embodiments described above, where the pressure relief mechanism is mounted in the box and seals the mounting hole so as to release a pressure in the box when the pressure in the box increases.

In the technical solution in an embodiment of this application, the battery includes a pressure relief mechanism disclosed in any one of the embodiments described above. Therefore, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

According to a third aspect, this application further provides an apparatus using a battery as a power supply. The apparatus is powered by the battery, and the battery is the battery disclosed in any one of the embodiments described above.

In a technical solution in an embodiment of this application, the apparatus using a battery as a power supply includes the battery disclosed in any one of the embodiments described above. Therefore, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

According to a fourth aspect, this application further provides a method for manufacturing a battery. The method includes: providing a box, on which a mounting hole is created; providing a pressure relief mechanism, where the pressure relief mechanism includes: a pedestal, on which an exhaust port is created; a cover assembly, configured to close or open the exhaust port; and a position limiter, snap-fastened to the cover assembly; the position limiter includes a first elastomer and a first limiting portion; the first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port; mounting the pressure relief mechanism in the box and sealing the mounting hole so as to release a pressure in the box through the pressure relief mechanism when the pressure in the box increases; providing a battery cell; and positioning the battery cell in the box.

In a technical solution in an embodiment of this application, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

According to a fifth aspect, this application further provides a piece of equipment for manufacturing a battery. The equipment includes: a first providing apparatus, configured to provide a box, on which a mounting hole is created; a second providing apparatus, configured to provide a battery cell; a third providing apparatus, configured to provide a pressure relief mechanism, where the pressure relief mechanism includes: a pedestal, on which an exhaust port is created; a cover assembly, configured to close or open the exhaust port; and a position limiter, snap-fastened to the cover assembly. The position limiter includes a first elastomer and a first limiting portion, and the first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port; a first assembling apparatus, configured to mount the pressure relief mechanism in the box and seal the mounting hole so as to release a pressure in the box through the pressure relief mechanism when the pressure in the box increases; and a second assembling apparatus, configured to position the battery cell in the box.

In a technical solution in an embodiment of this application, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

### BRIEF DESCRIPTION OF DRAWINGS

To describe the technical solutions in some embodiments of this application more clearly, the following outlines the drawings to be used in the description of the embodiments. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a pressure relief mechanism according to some embodiments of this application;
FIG. 4 is a cross-sectional view of a pressure relief mechanism according to some embodiments of this application;
FIG. 5 is a schematic structural diagram of a pedestal according to some embodiments of this application;
FIG. 6 is a schematic structural diagram of a pressure relief mechanism when a cover assembly closes an exhaust port according to some embodiments of this application;
FIG. 7 is a schematic structural diagram of a pressure relief mechanism when an exhaust port is opened according to some embodiments of this application;
FIG. 8 is an isometric side view of a pressure relief mechanism when an exhaust port is opened according to some embodiments of this application;
FIG. 9 is a schematic structural diagram of a pedestal according to some embodiments of this application;
FIG. 10 is a schematic structural diagram of a position limiter according to some embodiments of this application;
FIG. 11 is a schematic diagram of a positional relationship between a cover assembly and a position limiter according to some embodiments of this application;
FIG. 12 is a schematic structural diagram of a cover assembly according to some embodiments of this application;
FIG. 13 is a schematic structural diagram of a positional relationship between a pedestal, a cover assembly, and a position limiter according to some embodiments of this application;
FIG. 14 is a schematic structural diagram of a position limiter viewed from another direction according to some embodiments of this application;
FIG. 15 is a schematic structural diagram of a positional relationship between a cover assembly and a position limiter according to some embodiments of this application;
FIG. 16 is a flowchart of a method for manufacturing a battery according to some embodiments of this application; and
FIG. 17 is a schematic structural diagram of equipment for manufacturing a battery according to some embodiments of this application.

### List of reference numerals:

1-vehicle; 2-battery; 3-controller; 4-motor; 21-box; 22-battery cell; 211-first box assembly; 212-second box assembly; 213-accommodation space; 5-pedestal; 50-exhaust port; 51-first groove; 52-first guide piece; 6-- cover assembly; 61-second groove; 62-protruding portion; 63-third groove; 7-- position limiter; 71-first bulge; 711-boss; 72-first elastomer; 721-one end of the first elastomer; 73-second bulge; 74-annular groove; 741-notch; 75-fourth groove; 8-upper cover; 9-inner sealing ring; 010—outer sealing ring; 011-second guide piece; 012-second elastomer; 013-protection piece; 141-first providing apparatus; 142-second providing apparatus; 143-third providing apparatus; 144-first assembling apparatus; 145-second assembling apparatus.

### DETAILED DESCRIPTION OF EMBODIMENTS

To make the objectives, technical solutions, and advantages of the embodiments of this application clearer, the following gives a clear and complete description of the technical solutions in the embodiments of this application with reference to the drawings in the embodiments of this application. Apparently, the described embodiments are merely a part of but not all of the embodiments of this application. All other embodiments derived by a person of ordinary skill in the art based on the embodiments of this application without making any creative efforts shall fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not to limit this application.

The terms "include" and "contain" and any variations thereof used in the specification, claims, and brief description of drawings of this application are intended as non-exclusive inclusion. The word "a" or "an" preceding an item does not exclude the presence of a plurality of items.

Reference to an "embodiment" herein means that a specific feature, structure or characteristic described with reference to this embodiment may be included in at least one embodiment of this application. The reference to the term "embodiment" in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

The term "and/or" herein merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

All the directional terms used in the following description indicate the directions shown in the drawings, but are not intended to limit specific structures of the battery, electrical device, or battery manufacturing molds in this application. In the description of this application, a direction or positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of this application, but not intended to indicate or imply that the mentioned device or component must be located in the specified direction or constructed or operated in the specified direction. Therefore, such terms are not intended as a limitation on this application.

In addition, expressions such as an X direction, a Y direction, and a Z direction, which are used to indicate a direction in the description of the operation and structure of various components of a battery, electrical device, or battery manufacturing mold in an embodiment of this application are not absolute but relative. Although such indications are appropriate when the components of a battery pack are in the positions shown in the drawings, such directions are construed differently to adapt to a position change when the positions are changed.

In addition, the terms such as "first" and "second" used in the specification, claims, and brief description of drawings herein are intended to distinguish between different items, but are not intended to describe a specific sequence or order of precedence. A feature preceded by such terms may explicitly or implicitly include one or more of the features.

Unless otherwise specified, in the description of this application, "a plurality of" means two or more (including two). Similarly, "a plurality of groups" means two or more groups (including two groups).

It is hereby noted that, in the description of this application, unless otherwise expressly specified and defined, the terms "mount", "concatenate", and "connect" are understood in a broad sense. For example, a "concatenation" or "connection" of a mechanical structure may be a physical connection. For example, a physical connection may be a fixed connection. Examples of the fixed connection include a fixed connection implemented by using a fastener, and a fixed connection implemented by using a screw, a bolt, or other fasteners. A physical connection may be a detachable connection, for example, a snap-fit connection or snap-fastening. A physical connection may be an integrated connection, for example, welding, bonding, or one-piece shaped connection. The term "concatenation" or "connection" of a circuit structure may be a physical connection or an electrical connection or a signal connection. For example, the term may represent a direct connection, that is, a physical connection, or represent an indirect connection implemented through at least one intermediate component, as long as the circuit is connected up. The term may also represent internal communication between two components. The signal connection may be implemented by a circuit or a medium such as radio waves. A person of ordinary skill in the art can understand the specific meanings of the terms in this application according to the context.

Currently, with the development of electric vehicles, batteries have become the key to sustainable development of the automotive industry. Battery manufacturing technology is crucial to development of electric vehicles. Currently, under the trend of automobile electrification, the population of electric vehicles in China is growing rapidly. However, electric vehicles incur fires and combustion accidents frequently, and the safety of electric vehicles has become a focus of consumers' attention and is a fundamental guarantee for sustainable and healthy development of the new energy vehicle industry. Therefore, the relevant authority has recently issued mandatory national standards related to electric vehicles such as *Safety Requirements for Electric Vehicles* and *Electric Vehicles Traction Battery Safety Requirements.* The *Safety Requirements for Electric Vehicles* primarily stipulates the requirements on electrical safety and functional safety of electric vehicles, and emphasizes the requirements on waterproof performance of the integrated vehicle, insulation resistance, and performance monitoring, so as to reduce safety hazards of the vehicles in normal use and under circumstances such as wading. The *Electric Vehicles Traction Battery Safety Requirements* standard stresses the requirements on thermal safety, electrical safety, and functional safety of a battery system, and especially adds thermal diffusion test and waterproof requirements for a battery system in the latest version of the standard.

The inventor hereof has noticed that, safety and working reliability of an electric vehicle power system (such as a battery pack) serving as a core of a new energy electric vehicle are vital. To ensure safe and stable operation of the electric vehicle power system, the power system needs to be waterproof and dustproof, that is, fully hermetically sealed in theory. However, in a fully hermetic state, once a thermal runaway risk occurs inside the power system due to a fault, the internal pressure of the power system increases sharply, and the power system is at risk of explosion, thereby being prone to cause heavy casualties and property losses.

To solve the above problems, the applicant has developed a novel explosion-proof balance valve. The novel explosion-proof balance valve includes: a body, a guide rod, a spring, and a piston. The guide rod penetrates the body and is fixedly connected to the piston. The guide rod and the piston are distributed on the two sides of the body respectively. The spring is disposed between the guide rod and the body. A through-hole is created in the guide rod. The through-hole communicates with a first vent hole of the piston to form a vent channel. A waterproof breathable film used for covering the first vent hole is disposed on the piston. A fixed-pressure breathable component is disposed at another end of the guide rod. The fixed-pressure breathable component fills in the through-hole. When the battery is thermally runaway, the internal pressure of the battery pack increases sharply. At this time, the internal pressure is higher than the external pressure, resulting in a pressure difference. When the pressure difference rises to 3 KPa to 5 KPa, the explosion-proof valve slowly opens to release the pressure. When the pressure difference drops to 3 KPa to 5 KPa, the explosion-proof valve closes slowly, and the pressure relief ends. However, this novel explosion-proof balance valve exhibits the following technical problems: being unable to implement rapid pressure relief, and being unable to ensure consistency between the internal gas pressure and the external gas pressure of the battery pack.

In view of the above factors and in order to solve the above problems, through in-depth research, the applicant hereof has designed a pressure relief mechanism, a battery, an apparatus, and a method and equipment for manufacturing a battery. The pressure relief mechanism can implement rapid pressure relief inside the box to keep a gas pressure consistent between the inside and outside of the box.

The battery referred to herein is formed of at least one battery module. The battery may include types such as a lithium-ion secondary battery, a lithium-ion primary battery, a lithium-sulfur battery, a sodium-lithium-ion battery, a sodium-ion battery, or a magnesium-ion battery. The types of the battery are not limited herein. The battery is applicable to various electrical devices. The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

For ease of description in the following embodiments, a vehicle is used as an example of the electrical device.

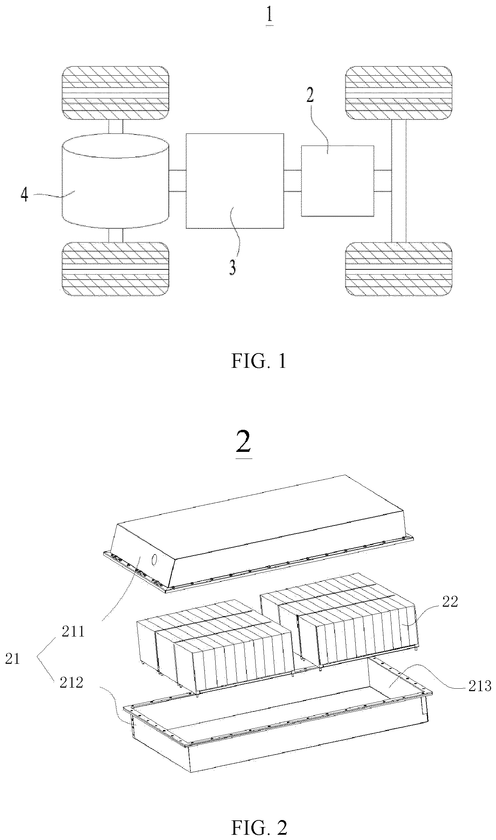

FIG. 1 is a schematic structural diagram of a vehicle 1 according to some embodiments of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

The vehicle 1 may further include a controller 3 and a motor 4. The controller 3 is configured to control the battery 2 to supply power to the motor 4, for example, to meet electrical energy requirements in starting, navigating, or running the vehicle 1.

In some embodiments of this application, the battery 2 serves not only as an operating power supply of the vehicle 1, but may also serve as a drive power supply of the vehicle 1 to provide a driving power supply for the vehicle 1 in place of or partly in place of fuel oil or natural gas.

FIG. 2 is a schematic exploded view of a battery 2 according to some embodiments of this application. As shown in FIG. 2, the battery 2 includes a box 21 and a battery cell 22. The battery cell 22 is accommodated in the box 21. A mounting hole is created on the box 21. The battery 2 further includes a pressure relief mechanism. The pressure relief mechanism is mounted on the box 21 and the mounting hole is sealed so as to release a pressure in the box 21 when the pressure in the box 21 increases. In some embodiments, the box 21 may include a first box component 211 and a second box component 212. The first box component 211 and the second box component 212 fit each other. The first box component 211 and the second box component 212 together define an accommodation space 213 configured to accommodate the battery cell 22. The second box component 212 may be a hollow structure opened at one end. The first box component 211 is a plate structure. The first box component 211 fits and covers the opening of the second box component 212 to form the box 21 that includes the accommodation space 213. The first box component 211 and the second box component 212 each may be a hollow structure opened at one end. The opening of the first box component 211 fits the opening of the second box component 212 to form the box 21 that includes the accommodation space 213. Definitely, the first box component 211 and the second box component 212 may be in various shapes such as a cylinder or a cuboid.

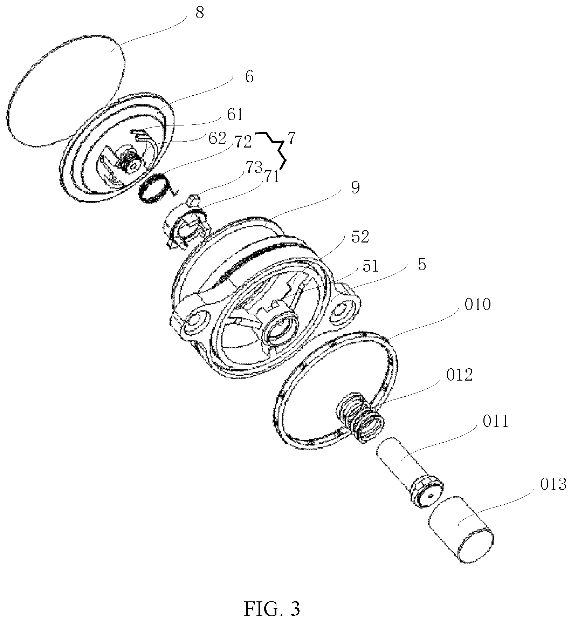

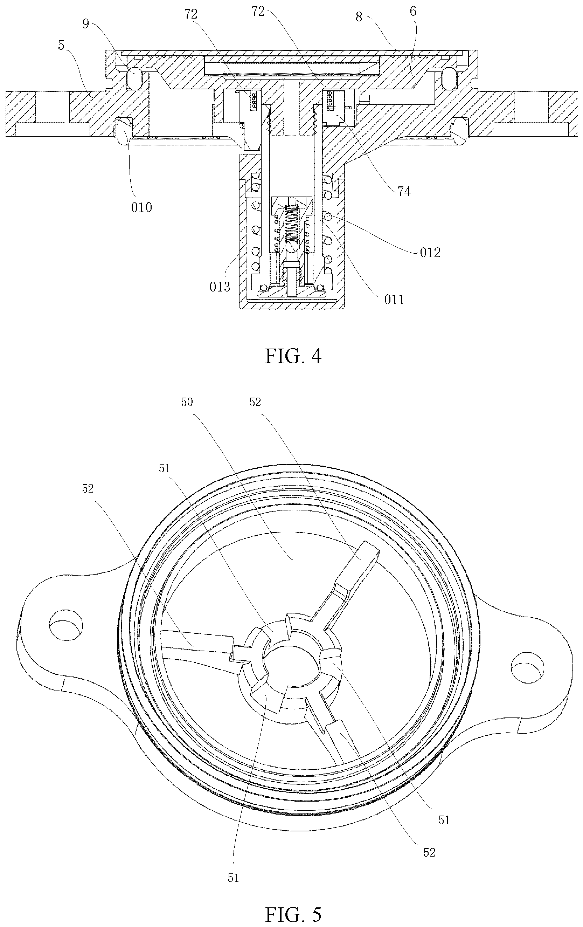

According to some embodiments of this application, this application further provides a pressure relief mechanism, applicable to a box. Referring to FIG. 3 and FIG. 4, FIG. 3 is an exploded view of a pressure relief mechanism according to some embodiments of this application, and FIG. 4 is a schematic structural diagram of a cover assembly according to some embodiments of this application.

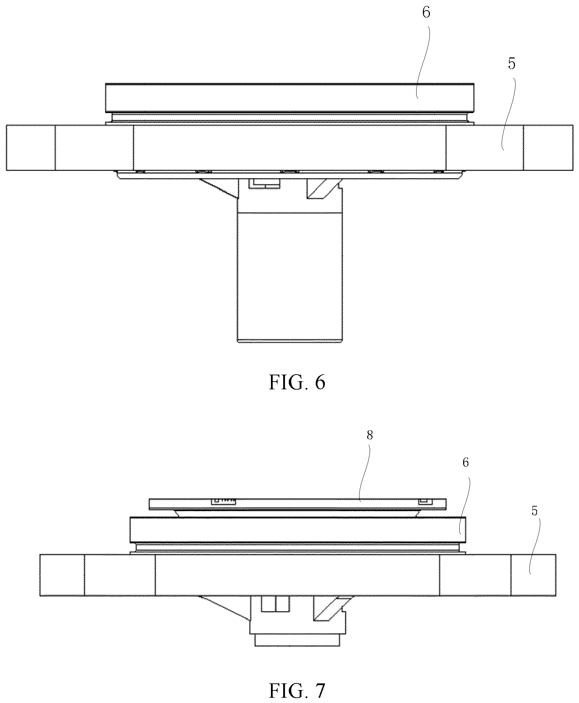

As shown in FIG. 3 and FIG. 4, the pressure relief mechanism includes: a pedestal 5, a cover assembly 6, and a position limiter 7. As shown in FIG. 5, FIG. 5 is a schematic structural diagram of a pedestal according to some embodiments of this application, in which an exhaust port 50 is created on the pedestal 5. With reference to FIG. 6. FIG. 6 is a schematic structural diagram of a pressure relief mechanism when a cover assembly closes an exhaust port according to some embodiments of this application, in which the cover assembly 6 is configured to close the exhaust port 50. With reference to FIG. 7. FIG. 7 is a schematic structural diagram of a pressure relief mechanism when an exhaust port is opened according to some embodiments of this application, in which the cover assembly 6 is configured to open the exhaust port 50. The position limiter 7 is snap-fastened to the cover assembly 6. The position limiter 7 includes a first limiting portion and a first elastomer 72. The first limiting portion is configured to: when the cover assembly 6 closes the exhaust port 50, restrict the position limiter 7 from moving relative to the pedestal 5; and, when a pressure in the box increases, make the position limiter 7 move along an opening direction of the cover assembly 6 to free the first limiting portion from constraint of the pedestal 5 and enable the position limiter 7 to rotate relative to the cover assembly 6 under resilience of the first elastomer 72, so that the first limiting portion abuts an end face of the pedestal 5 to keep the cover assembly 6 in a state of opening the exhaust port 50.

The number of exhaust ports 50 may be designed as actually required, and is not limited herein. The number shown in FIG. 4 is merely exemplary.

In practical applications of this embodiment, the pressure relief mechanism may further include, but is not limited to, an upper cover 8, an inner sealing ring 9, and an outer sealing ring 010. The upper cover 8 covers a side of the cover assembly 6, the side being away from the pedestal 5. The upper cover is configured to protect the cover assembly 6. The inner sealing ring 9 is disposed between the pedestal 5 and the cover assembly 6, and is configured to implement sealing between the pedestal 5 and the cover assembly 6. The outer sealing ring 010 is disposed on a side of the pedestal 5, the side being away from the cover assembly 6. The outer sealing ring is configured to perform sealing between the pedestal 5 and a mounting position such as the box.

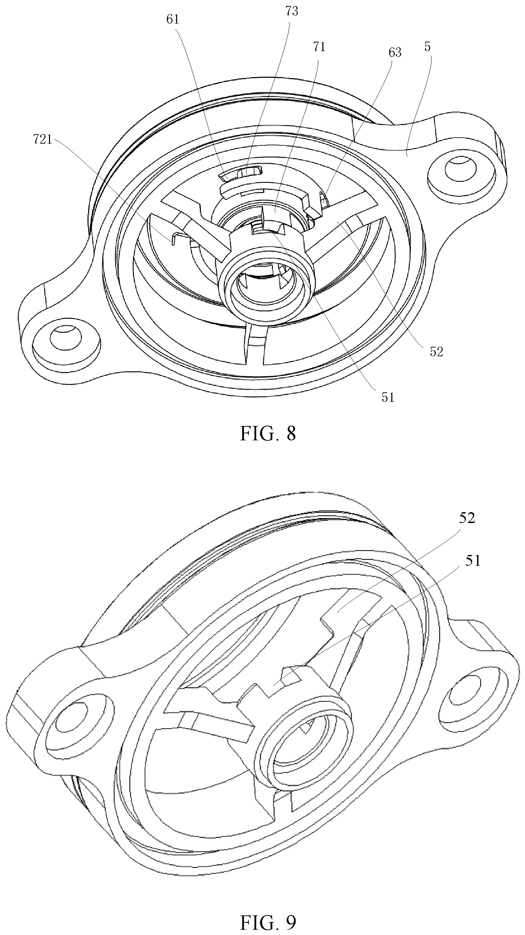

In this embodiment, when the cover assembly 6 closes the exhaust port 50, the first limiting portion restricts the position limiter 7 from moving relative to the pedestal 5. When the pressure in the box increases, the position limiter 7 moves along the opening direction of the cover assembly 6 to free the first limiting portion from constraint of the pedestal 5. Referring to FIG. 8, FIG. 8 is an isometric side view of a pressure relief mechanism when an exhaust port is opened according to some embodiments of this application. The position limiter 7 rotates relative to the cover assembly 6 under resilience of the first elastomer 72, so that the first limiting portion abuts the end face of the pedestal 5 to keep the cover assembly 6 in the state of opening the exhaust port 50. In this case, the pressure inside the box drops rapidly, thereby exerting an effect of rapid pressure relief. In addition, such arrangement ensures consistency of the gas pressure between the inside and outside of the box, without causing a gas pressure difference between the inside and outside of the box (for example, a gas pressure difference of 3 KPa to 5 KPa). The gas pressure difference causes the battery pack to swell and bulge. The position limiter 7 rotates relative to the cover assembly 6 so that the first limiting portion abuts the end face of the pedestal 5. In this way, the cover assembly 6 is caused to be in a state of opening the exhaust port 50. Therefore, fine particles in the box can also seep out of the exhaust port 50, without blocking the exhaust port 50. The effect of rapid pressure relief of the pressure relief mechanism will not be impaired by the fine particles in the box that block the exhaust port 50, and the pressure difference between the inside and outside of the box will not be affected.

In the technical solution in an embodiment of this application, when the internal pressure increases due to thermal runaway in the box or other reasons, the position limiter 7 moves along the opening direction of the cover assembly 6 to free the first limiting portion from constraint of the pedestal 5 and enable the position limiter 7 to rotate relative to the cover assembly 6 under resilience of the first elastomer 72, so that the first limiting portion abuts the end face of the pedestal 5. In this case, because the first limiting portion abuts the end face of the pedestal 5, the first limiting portion is restrained from rebounding. In this way, the cover assembly 6 keeps in the state of opening the exhaust port 50 and it is convenient to rapidly release the internal pressure of the box through the opened exhaust port 50, and keep a consistent pressure between the inside and outside of the box. This avoids the risk of explosion of the box caused by a sharp increase in the internal pressure of the box, and avoids heavy casualties and property losses.

According to some embodiments of this application, the first limiting portion is configured as a first bulge 71. With reference to FIG. 9, FIG. 9 is a schematic structural diagram of a pedestal according to some embodiments of this application, in which a first groove 51 is created in the pedestal 5. Alternatively, in another embodiment, the first limiting portion is configured as a first groove, and a first bulge is created on the pedestal 5. As shown in FIG. 8 and FIG. 9, an example is described below in which the first limiting portion is configured as a first bulge 71 and a first groove 51 is created on the pedestal 5. The first bulge 71 and the first groove 51 are so configured that when the cover assembly 6 closes the exhaust port 50, the first bulge 71 and the first groove 51 fit each other to restrict the position limiter 7 from moving relative to the pedestal 5. When the pressure in the box increases, the position limiter 7 moves along the opening direction of the cover assembly 6 to free the first bulge 71 from constraint of the first groove 51.

It is worth mentioning that a boss 711 extends out of the first bulge 71 toward the pedestal 5. The boss 711 not only increases the strength of the first bulge 71, but also increases the strength of connection between the first bulge 71 and the first groove 51.

To be specific, when the cover assembly 6 closes the exhaust port 50, the first bulge 71 and the first groove 51 fit each other to restrict the position limiter 7 from moving relative to the pedestal 5. For example, the position limiter 7 may be restricted from moving along the opening direction of the cover assembly 6. When the pressure in the box increases, the pressure in the box makes the position limiter 7 move along the opening direction of the cover assembly 6 to free the first bulge 71 from constraint of the first groove 51. When the first bulge 71 is freed from constraint of the first groove 51, the position limiter 7 can rotate relative to the cover assembly 6 under resilience of the first elastomer 72, so that the first limiting portion abuts the end face of the pedestal 5 to keep the cover assembly 6 in the state of opening the exhaust port 50.

In the technical solution in an embodiment of this application, when the pressure in the box increases, the position limiter 7 moves along the opening direction of the cover assembly 6 to free the first bulge 71 from constraint of the first groove 51. In this way, the position limiter 7 can rotate relative to the cover assembly 6 under resilience of the first elastomer 72, so that the first limiting portion abuts the end face of the pedestal 5 to keep the cover assembly 6 in the state of opening the exhaust port 50.

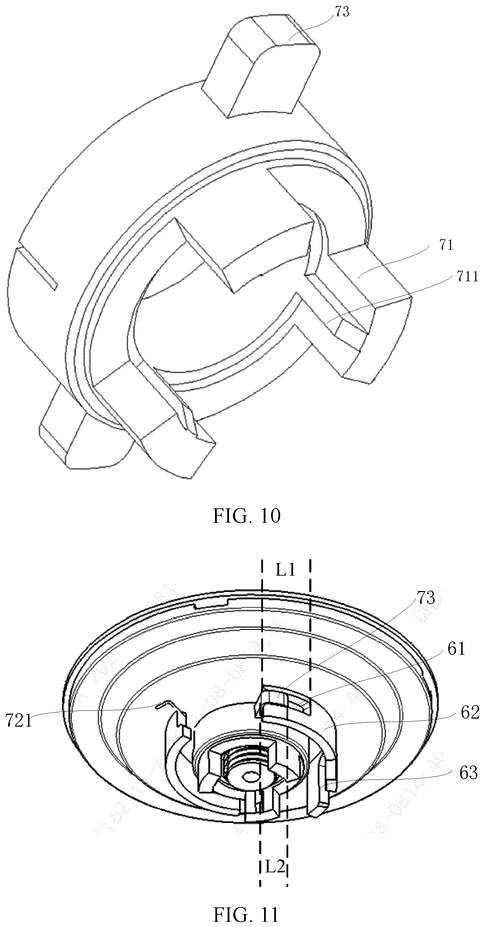

According to some embodiments of this application, referring to FIG. 10, FIG. 10 is a schematic structural diagram of a position limiter according to some embodiments of this application. A second bulge 73 is created on one of the cover assembly 6 or the position limiter 7, and a second groove 61 is created in the other of the cover assembly 6 or the position limiter 7. The second groove 61 and the second bulge 73 are so configured that at least a part of the second bulge 73 is disposed in the second groove 61, and the cover assembly 6 is able to drive, through a fit between the second groove 61 and the second bulge 73, the position limiter 7 to move along the opening direction of the cover assembly 6.

In such embodiments of this application, through the fit between the second groove 61 and the second bulge 73, the cover assembly 6 can drive the position limiter 7 to move along the opening direction of the cover assembly 6, so that the first bulge 71 is freed from constraint of the first groove 51.

According to some embodiments of this application, referring to FIG. 8, the second groove 61 is created in the cover assembly 6, and the second bulge 73 is created on the position limiter 7.

For example, when the pressure in the box increases, the pressure in the box exerts a pressure on the cover assembly 6 along the opening direction of the cover assembly 6. In this case, through the fit between the second groove 61 and the second bulge 73, the cover assembly 6 can drive the position limiter 7 to move along the opening direction of the cover assembly 6 under the pressure exerted along the opening direction of the cover assembly 6, so that the first bulge 71 is freed from constraint of the first groove 51. When the first bulge 71 is freed from constraint of the first groove 51, the position limiter 7 can rotate relative to the cover assembly 6 under resilience of the first elastomer 72, so that the first limiting portion abuts the end face of the pedestal 5. In this case, when the position limiter 7 rotates relative to the cover assembly 6, the second bulge 73 moves relatively within a movement range defined by the second groove 61.

In the technical solution in such embodiments of this application, when the position limiter 7 moves along the opening direction of the cover assembly 6, through the fit between the second groove 61 and the second bulge 73, the cover assembly 6 can drive the position limiter 7 to move along the opening direction of the cover assembly 6. In addition, when the position limiter 7 rotates relative to the cover assembly 6, the second bulge 73 can move relatively within a movement range defined by the second groove 61.

According to some embodiments of this application, referring to FIG. 11, FIG. 11 is a schematic diagram of a positional relationship between a cover assembly and a position limiter according to some embodiments of this application. Along a circumferential direction of the position limiter 7, a dimension L1 of the second groove 61 is greater than a dimension L2 of the second bulge 73, thereby enabling the position limiter 7 to rotate relative to the cover assembly 6.

In the technical solutions in such embodiments of this application, due to the dimension of the second groove 61 being greater than the dimension of the second bulge 73, when the position limiter 7 rotates relative to the cover assembly 6, the second bulge 73 can move relatively within the movement range defined by the second groove 61.

According to some embodiments of this application, referring to FIG. 10, the second bulge 73 is disposed on an outer peripheral surface of the position limiter 7.

In the technical solutions in such embodiments of this application, a part of the cover assembly 6 is disposed along the outer peripheral surface of the position limiter 7. Therefore, by disposing the second bulge 73 on the outer peripheral surface of the position limiter 7, the cover assembly 6 and the position limiter 7 can be assembled together by fitting the second bulge 73 into the second groove 61 directly, thereby facilitating the assembling.

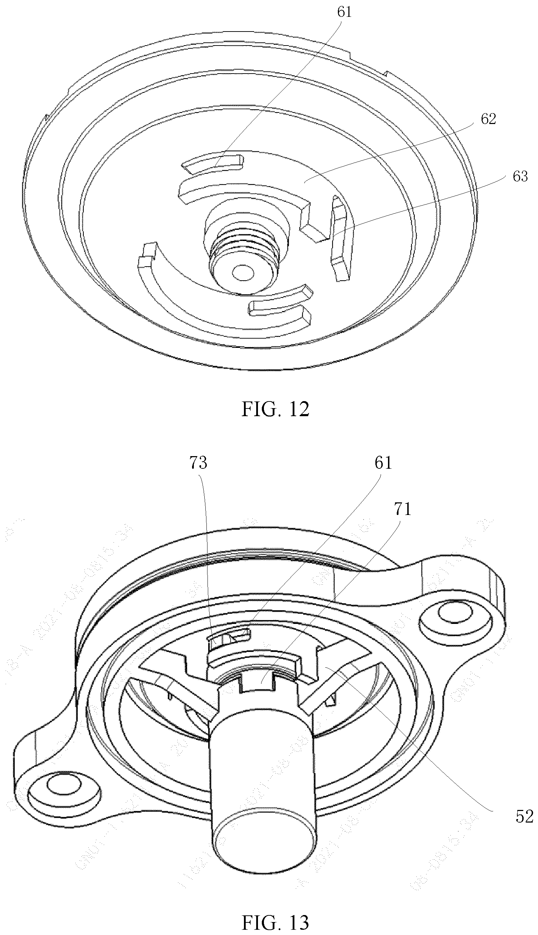

According to some embodiments of this application, referring to FIG. 12, FIG. 12 is a schematic structural diagram of a cover assembly according to some embodiments of this application. A protruding portion 62 is disposed on a side of the cover assembly 6, the side being oriented toward the position limiter 7. The second groove 61 is created in the protruding portion 62.

In the technical solutions in such embodiments of this application, the protruding portion 62 is disposed on the side of the cover assembly 6, the side being oriented toward the position limiter 7. In this way, the cover assembly 6 and the position limiter 7 can be assembled together by fitting the second bulge 73 into the second groove 61 directly, thereby facilitating the assembling.

According to some embodiments of this application, a third groove 63 is created in one of the cover assembly 6 or the pedestal 5. A first guide piece 52 is disposed on the other of the cover assembly 6 or the pedestal 5. The third groove 63 and the first guide piece 52 are so configured that at least a part of the first guide piece 52 is located in the third groove 63; and, when the position limiter 7 moves along the opening direction of the cover assembly 6, the first guide piece 52 moves within a path defined by the third groove 63.

In the technical solutions in such embodiments of this application, the movement range of the first guide piece 52 can be limited within the path defined by the third groove 63.

According to some embodiments of this application, referring to FIG. 12, a protruding portion 62 is disposed on a side of the cover assembly 6, the side being oriented toward the position limiter 7. The third groove 63 is created in the protruding portion 62. The third groove 63 opens toward the pedestal 5. The first guide piece 52 is disposed on the pedestal 5. The third groove 63 and the first guide piece 52 are so configured that at least a part of the first guide piece 52 is located in the third groove 63; and, when the position limiter 7 moves along the opening direction of the cover assembly 6, the first guide piece 52 moves within a path defined by the third groove 63.

In the technical solutions in such embodiments of this application, a protruding portion 62 is disposed on the side of the cover assembly 6, the side being oriented toward the position limiter 7. The third groove 63 is created in the protruding portion 62, and the third groove 63 opens toward the pedestal 5, thereby providing a specific direction and position of the third groove 63. By disposing the first guide piece 52 on the pedestal 5, a mounting position of the first guide piece 52 is provided. With such arrangement, when the position limiter 7 moves along the opening direction of the cover assembly 6, the first guide piece 52 is enabled to move within the path defined by the third groove 63. Moreover, this design facilitates assembling and saves assembling cost.

According to some embodiments of this application, referring to FIG. 12 and FIG. 13, FIG. 13 is a schematic structural diagram of a positional relationship between a pedestal, a cover assembly, and a position limiter according to some embodiments of this application. When the position limiter 7 rotates relative to the cover assembly 6, at least a part of the first guide piece 52 is located in the third groove 63 to limit the position of the cover assembly 6.

In the technical solutions in such embodiments of this application, when the position limiter 7 rotates relative to the cover assembly 6, at least a part of the first guide piece 52 is located in the third groove 63, thereby preventing the cover assembly 6 from rotating along the pedestal 5 under the resilience of the first elastomer 72, and in turn, improving the practicability of the rotation of the position limiter 7 relative to the cover assembly 6.

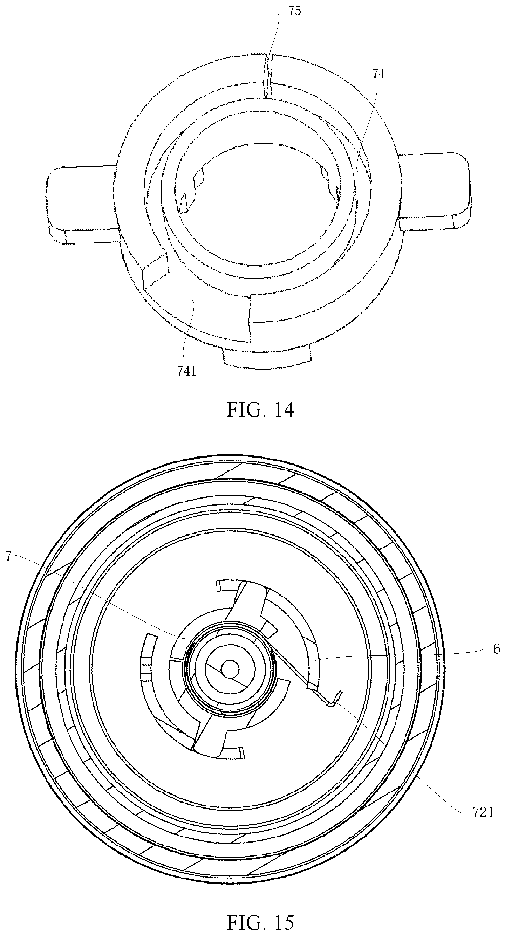

According to some embodiments of this application, referring to FIG. 14, FIG. 14 is a schematic structural diagram of a position limiter viewed from another direction according to some embodiments of this application. An annular groove 74 is created on a side of the position limiter 7, the side being oriented toward the cover assembly 6. The first elastomer 72 is disposed in the annular groove 74. A notch 741 is created on a wall of the annular groove 74. One end of the first elastomer 72 is configured to protrude from the notch 741 and abut against the cover assembly 6. Another end of the first elastomer 72 is configured to abut on the wall of the annular groove 74, thereby enabling the position limiter 7 to rotate relative to the cover assembly 6 under the resilience of the first elastomer 72.

For example, a fourth groove 75 along a radial direction of the annular groove 74 is created on the wall of the annular groove 74. One end 721 of the first elastomer is configured to protrude from the notch 741 and abut against the cover assembly 6. Another end of the first elastomer 72 is configured to abut in the fourth groove 75 to fix the other end of the first elastomer 72.

In the technical solutions in such embodiments of this application, the other end of the first elastomer 72 is configured to abut on the wall of the annular groove 74, so that the other end of the first elastomer 72 can be relatively fixed to the wall of the annular groove 74. As shown in FIG. 15, FIG. 15 is a schematic structural diagram of a positional relationship between a cover assembly and a position limiter according to some embodiments of this application. One end 721 of the first elastomer is configured to protrude from the notch 741 in FIG. 14 and abut against the cover assembly 6, so that the first elastomer 72 is enabled to exert a force on the cover assembly 6. In addition, because the cover assembly 6 is restrained from rotating, such a design enables the position limiter 7 to rotate relative to the cover assembly 6 under the resilience of the first elastomer 72.

According to some embodiments of this application, the first elastomer 72 is configured as a torsion spring.

It is worth mentioning that in such embodiments of this application, a torsion spring is used as an example for describing the first elastomer 72, but it is understood that the first elastomer 72 is not limited to the torsion spring. Any and all forms of the first elastomer 72 fall within the protection scope of this application as long as the first elastomer 72: enters a compressed state when the cover assembly 6 closes the exhaust port 50 to restrict the position limiter 7 from moving relative to the pedestal 5; and enables the position limiter 7 to rotate relative to the cover assembly 6 under the resilience of the first elastomer 72 when the first limiting portion is freed from constraint of the pedestal 5. For example, the first elastomer 72 may be a combination of a plurality of common springs to achieve the above effects.

In the technical solutions in such embodiments of this application, the implementation of the torsion spring is relatively simple and cost-efficient, and the mounting manner of the torsion spring is relatively simple, thereby reducing material cost and mounting cost.

According to some embodiments of this application, referring to FIG. 3, the pressure relief mechanism further includes: a second guide piece 011 and a second elastomer 012. One end of the second guide piece 011 is connected to the cover assembly 6. A flange extending along the second guide piece 011 is disposed at an end of the second guide piece 011, the end being away from the cover assembly 6. The second elastomer 012 is sleeved around the second guide piece 011, and one end of the second elastomer 012 abuts on the flange.

In some embodiments, the second elastomer 012 may be a spring. A first mounting hole toward the cover assembly 6 may be created on the second guide piece 011. A first inner thread is created in the first mounting hole. A first mounting rod is disposed on the cover assembly 6 toward the pedestal 5. A first outer thread that matches the first inner thread of the first mounting hole is created on the first mounting rod. One end of the second guide piece 011 is connected to the cover assembly 6 by matching the first inner thread to the first outer thread.

Alternatively, in another embodiment, a second mounting hole is created on the cover assembly 6 toward the pedestal 5. A second inner thread is created in the second mounting hole. A second mounting rod toward the cover assembly 6 is disposed on the second guide piece 011. A second outer thread that matches the second mounting hole is created on the second mounting rod. One end of the second guide piece 011 is connected to the cover assembly 6 by matching the second inner thread to the second outer thread.

Moreover, in practical applications, the pressure relief mechanism may further include a protection piece 013. The protection piece 013 is sleeved around the second guide piece 011 and configured to protect the second guide piece 011. In this embodiment, a maximum stroke range of the second elastomer 012 is less than a maximum length of a path of the first guide piece 52, the path being defined by the third groove 63. In this way, when the position limiter 7 rotates along the cover assembly 6, the first guide piece 52 still remains within the path defined by the third groove 63. In the technical solution in this embodiment of this application, the second elastomer 012 works to prevent the cover assembly from moving beyond the movement range when the cover assembly 6 moves along the opening direction of the cover assembly 6, where the moving beyond the movement range may cause damage to the pressure relief mechanism. In this way, the lifespan of the pressure relief mechanism is increased. When the pressure relief mechanism is in normal use, the second elastomer 012 can exert a force on the cover assembly 6 to make the cover assembly 6 close the exhaust port 50.

According to some embodiments of this application, this application further provides a pressure relief mechanism. Referring to FIG. 3 to FIG. 15, the pressure relief mechanism includes: a pedestal 5, a cover assembly 6, and a position limiter 7. An exhaust port 50 is created on the pedestal 5. The cover assembly 6 is configured to close or open the exhaust port 50. The position limiter 7 is snap-fastened to the cover assembly 6. The position limiter 7 includes a first limiting portion and a first elastomer 72. The first limiting portion is configured to: when the cover assembly 6 closes the exhaust port 50, restrict the position limiter 7 from moving relative to the pedestal 5; and, when a pressure in the box increases, make the position limiter 7 move along an opening direction of the cover assembly 6 to free the first limiting portion from constraint of the pedestal 5 and enable the position limiter 7 to rotate relative to the cover assembly 6 under resilience of the first elastomer 72, so that the first limiting portion abuts an end face of the pedestal 5 to keep the cover assembly 6 in a state of opening the exhaust port 50.

The first limiting portion is configured as a first bulge 71, and a first groove 51 is created on the pedestal 5. The first bulge 71 and the first groove 51 are so configured that when the cover assembly 6 closes the exhaust port 50, the first bulge 71 and the first groove 51 fit each other to restrict the position limiter 7 from moving relative to the pedestal 5. When the pressure in the box increases, the position limiter 7 moves along the opening direction of the cover assembly 6 to free the first bulge 71 from constraint of the first groove 51.

The second groove 61 is created in the cover assembly 6, and the second bulge 73 is created on the position limiter 7. The second groove 61 and the second bulge 73 are so configured that at least a part of the second bulge 73 is disposed in the second groove 61, and the cover assembly 6 is able to drive, through a fit between the second groove 61 and the second bulge 73, the position limiter 7 to move along the opening direction of the cover assembly 6.

A third groove 63 is created in one of the cover assembly 6 or the pedestal 5. A first guide piece 52 is disposed on the other of the cover assembly 6 or the pedestal 5. The third groove 63 and the first guide piece 52 are so configured that at least a part of the first guide piece 52 is located in the third groove 63; and, when the position limiter 7 moves along the opening direction of the cover assembly 6, the first guide piece 52 moves within a path defined by the third groove 63.

In the technical solution in an embodiment of this application, when the internal pressure increases due to thermal runaway in the box or other reasons, the position limiter 7 moves along the opening direction of the cover assembly 6 to free the first limiting portion from constraint of the pedestal 5 and enable the position limiter 7 to rotate relative to the cover assembly 6 under resilience of the first elastomer 72, so that the first limiting portion abuts the end face of the pedestal 5. In this case, because the first limiting portion abuts the end face of the pedestal 5, the first limiting portion is restrained from rebounding. In this way, the cover assembly 6 keeps in the state of opening the exhaust port 50 and it is convenient to rapidly release the internal pressure of the box through the opened exhaust port 50, and keep a consistent pressure between the inside and outside of the box. This avoids the risk of explosion of the box caused by a sharp increase in the internal pressure of the box, and avoids heavy casualties and property losses.

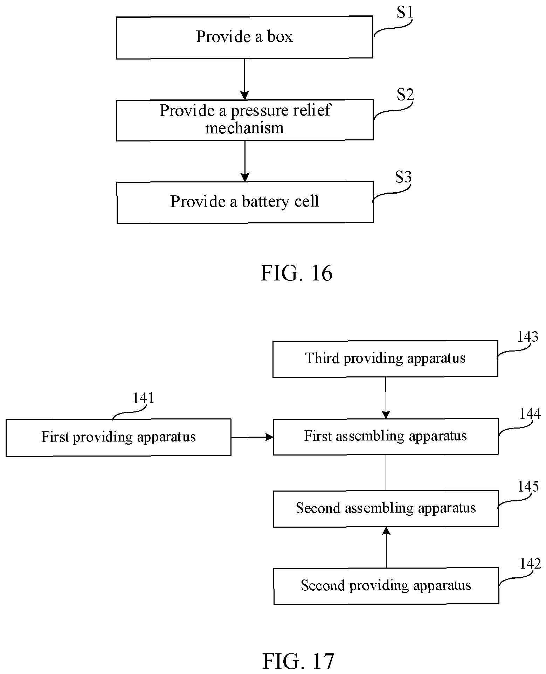

According to some embodiments of this application, this application further provides a method for manufacturing a battery. Referring to FIG. 16, FIG. 16 is a flowchart of a method for manufacturing a battery according to some embodiments of this application. As shown in FIG. 16, the method for manufacturing a battery includes the following steps:
Step S 1: Providing a box. A mounting hole is created on the box.
Step S2: Providing a pressure relief mechanism. The pressure relief mechanism includes: a pedestal, a cover assembly, and a position limiter.

An exhaust port is created on the pedestal. The cover assembly is configured to close or open the exhaust port. The position limiter is snap-fastened to the cover assembly. The position limiter includes a first elastomer and a first limiting portion. The first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port; mounting the pressure relief mechanism in the box and sealing the mounting hole so as to release a pressure in the box through the pressure relief mechanism when the pressure in the box increases.

Step S3: Providing a battery cell, and positioning the battery cell in the box.

It is worth mentioning that, a practical process of manufacturing a battery according to the method for manufacturing a battery is not limited to the implementation order from step S1 to steps S2 and S3. Alternatively, the order of performing the steps may be: providing a pressure relief mechanism first, and then providing a box, and finally providing a battery cell; or may be: providing a battery cell first, and then providing a pressure relief mechanism, and finally providing a box, and so on. This embodiment of this application is understood as: the above order of steps is one of the specific embodiments, and the implementation order is not limited to performing steps from S1 to S2 and S3.

In the technical solution in an embodiment of this application, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses. Moreover, when the pressure relief mechanism is in normal use, the exhaust port may be closed by using the sealing effect of the cover assembly.

According to some embodiments of this application, this application further provides a piece of equipment for manufacturing a battery. Referring to FIG. 17, FIG. 17 is a schematic structural diagram of equipment for manufacturing a battery according to some embodiments of this application.

As shown in FIG. 17, the equipment for manufacturing a battery includes: a first providing apparatus 141, configured to provide a box, on which a mounting hole is created; a second providing apparatus 142, configured to provide a battery cell; a third providing apparatus 143, configured to provide a pressure relief mechanism, where the pressure relief mechanism includes: a pedestal, on which an exhaust port is created; a cover assembly, configured to close or open the exhaust port; and a position limiter, snap-fastened to the cover assembly. The position limiter includes a first elastomer and a first limiting portion. The first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port; a first assembling apparatus 144, configured to mount the pressure relief mechanism in the box and seal the mounting hole so as to release a pressure in the box through the pressure relief mechanism when the pressure in the box increases; and a second assembling apparatus 145, configured to position the battery cell in the box.

In the technical solution in an embodiment of this application, when the internal pressure increases due to thermal runaway in the box or other reasons, the position limiter moves along the opening direction of the cover assembly to free the first limiting portion from constraint of the pedestal and enable the position limiter to rotate relative to the cover assembly under resilience of the first elastomer, so that the first limiting portion abuts the end face of the pedestal. In this case, because the first limiting portion abuts the end face of the pedestal, the first limiting portion is restrained from rebounding. In this way, the cover assembly keeps in the state of opening the exhaust port, and it is convenient to rapidly release the internal pressure of the box through the opened exhaust port, and keep a consistent pressure between the inside and outside of the box. This avoids the risk of explosion of the box caused by a sharp increase in the internal pressure of the box, and avoids heavy casualties and property losses.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A pressure relief mechanism, applicable to a box, wherein the pressure relief mechanism comprises:
a pedestal, on which an exhaust port is created;
a cover assembly, configured to close or open the exhaust port; and
a position limiter, wherein the position limiter is snap-fastened to the cover assembly, the position limiter comprises a first elastomer and a first limiting portion, and the first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port.

2. The pressure relief mechanism according to claim 1, wherein
the first limiting portion is configured as a first bulge, and a first groove is created in the pedestal; or, the first limiting portion is configured as a first groove, and a first bulge is created on the pedestal; and
the first bulge and the first groove are configured to: when the cover assembly closes the exhaust port, fit each other to restrict the position limiter from moving relative to the pedestal; and, when the pressure in the box increases, make the position limiter move along the opening direction of the cover assembly to free the first bulge from constraint of the first groove.

3. The pressure relief mechanism according to claim 1 or 2, wherein
a second bulge is created on one of the cover assembly or the position limiter, and a second groove is created in the other of the cover assembly or the position limiter; and
the second groove and the second bulge are so configured that at least a part of the second bulge is disposed in the second groove, and the cover assembly is able to drive, through a fit between the second groove and the second bulge, the position limiter to move along the opening direction of the cover assembly.

4. The pressure relief mechanism according to claim 3, wherein
along a circumferential direction of the position limiter, a dimension of the second groove is greater than a dimension of the second bulge to enable the position limiter to rotate relative to the cover assembly.

5. The pressure relief mechanism according to claim 3 or 4, wherein
the second groove is created in the cover assembly, and the second bulge is created on the position limiter.

6. The pressure relief mechanism according to claim 5, wherein
the second bulge is disposed on an outer peripheral surface of the position limiter.

7. The pressure relief mechanism according to claim 5 or 6, wherein
a protruding portion is disposed on a side of the cover assembly, the side being oriented toward the position limiter; and the second groove is created in the protruding portion.

8. The pressure relief mechanism according to any one of claims 1 or 7, wherein
a third groove is created in one of the cover assembly or the pedestal, and a first guide piece is disposed on the other of the cover assembly or the pedestal; and
the third groove and the first guide piece are so configured that at least a part of the first guide piece is located in the third groove; and, when the position limiter moves along the opening direction of the cover assembly, the first guide piece moves within a path defined by the third groove.

9. The pressure relief mechanism according to claim 8, wherein
a protruding portion is disposed on a side of the cover assembly, the side being oriented toward the position limiter; the third groove is created in the protruding portion; the third groove opens toward the pedestal; and the first guide piece is disposed on the pedestal.

10. The pressure relief mechanism according to claim 8 or 9, wherein
when the position limiter rotates relative to the cover assembly, at least a part of the first guide piece is located in the third groove to limit a position of the cover assembly.

11. The pressure relief mechanism according to any one of claims 1 to 10, wherein
an annular groove is created on a side of the position limiter, the side being oriented toward the cover assembly; and the first elastomer is disposed in the annular groove; and
a notch is created on a wall of the annular groove; one end of the first elastomer is configured to protrude from the notch and abut against the cover assembly; and another end of the first elastomer is configured to abut on the wall of the annular groove to enable the position limiter to rotate relative to the cover assembly under the resilience of the first elastomer.

12. The pressure relief mechanism according to any one of claims 1 to 11, wherein the first elastomer is configured as a torsion spring.

13. The pressure relief mechanism according to any one of claims 1 to 12, wherein the pressure relief mechanism further comprises:
a second guide piece, wherein one end of the second guide piece is connected to the cover assembly, and a flange extending along the second guide piece is disposed at an end of the second guide piece, the end being away from the cover assembly; and
a second elastomer, wherein the second elastomer is sleeved around the second guide piece, and one end of the second elastomer abuts on the flange.

14. A battery, comprising:
a box, on which a mounting hole is created;
a battery cell, located in the box; and
the pressure relief mechanism according to any one of claims 1 to 13, wherein the pressure relief mechanism is mounted in the box and seals the mounting hole so as to release a pressure in the box when the pressure in the box increases.

15. An apparatus that uses a battery as a power supply, wherein the apparatus is powered by the battery, and the battery is the battery according to claim 14.

16. A method for manufacturing a battery, comprising:
providing a box, on which a mounting hole is created;
providing a pressure relief mechanism, wherein the pressure relief mechanism comprises:
a pedestal, on which an exhaust port is created;
a cover assembly, configured to close or open the exhaust port;
a position limiter, wherein the position limiter is snap-fastened to the cover assembly, the position limiter comprises a first elastomer and a first limiting portion, and the first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port;
mounting the pressure relief mechanism in the box and sealing the mounting hole so as to release a pressure in the box through the pressure relief mechanism when the pressure in the box increases;
providing a battery cell; and
positioning the battery cell in the box.

17. A piece of equipment for manufacturing a battery, comprising:
a first providing apparatus, configured to provide a box, on which a mounting hole is created;
a second providing apparatus, configured to provide a battery cell;
a third providing apparatus, configured to provide a pressure relief mechanism, wherein the pressure relief mechanism comprises:
a pedestal, on which an exhaust port is created;
a cover assembly, configured to close or open the exhaust port;
a position limiter, snap-fastened to the cover assembly, wherein the position limiter comprises a first elastomer and a first limiting portion, and the first limiting portion is configured to: when the cover assembly closes the exhaust port, restrict the position limiter from moving relative to the pedestal; and, when a pressure in the box increases, make the position limiter move along an opening direction of the cover assembly to free the first limiting portion from constraint of the pedestal and enable the position limiter to rotate relative to the cover assembly under resilience of the first elastomer, so that the first limiting portion abuts an end face of the pedestal to keep the cover assembly in a state of opening the exhaust port;
a first assembling apparatus, configured to mount the pressure relief mechanism in the box and seal the mounting hole so as to release a pressure in the box through the pressure relief mechanism when the pressure in the box increases; and
a second assembling apparatus, configured to position the battery cell in the box.
